(19) Europäisches Patentamt
European Patent Office
Office européen des brevets

(11) **EP 3 667 292 A1**

(12) **DEMANDE DE BREVET EUROPEEN**

(43) Date de publication:
**17.06.2020 Bulletin 2020/25**

(51) Int Cl.:
*G01N 17/00* (2006.01)   *G01N 17/04* (2006.01)

(21) Numéro de dépôt: **19211980.8**

(22) Date de dépôt: **28.11.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **13.12.2018 FR 1872831**

(71) Demandeur: **IFP Energies nouvelles**
**92852 Rueil-Malmaison Cedex (FR)**

(72) Inventeurs:
• **KITTEL, Jean**
**92852 RUEIL-MALMAISON CEDEX (FR)**
• **BONNEAU, Alexandre**
**92852 RUEIL-MALMAISON CEDEX (FR)**

(54) **DISPOSITIF POUR DETECTER UN RISQUE DE FRAGILISATION PAR L'HYDROGENE D'UN METAL**

(57) La présente invention concerne un dispositif pour détecter un risque de fragilisation par l'hydrogène d'un métal, le dispositif étant destiné à être disposé dans un environnement hydrogénant. Le dispositif selon l'invention comprend au moins : (a) un moyen de mesure de la pression, (b) une chambre fermée délimitée par des parois formées dans le métal, (c) au moins un corps formé dans un matériau non poreux et inerte à l'hydrogène disposé à l'intérieur de la chambre, le volume du ou des corps représentant au moins 50% du volume intérieur de la chambre.

**[Fig 1]**

**Figure 1**

EP 3 667 292 A1

## Description

## Domaine technique

La présente invention concerne le domaine de la détection d'un risque de fragilisation par l'hydrogène (FPH) d'un métal tel que l'acier, risque qui peut notamment survenir dans des environnements hydrogénant tels que le raffinage pétrolier, la production pétrolière, le transport de produits pétroliers ou encore le traitement du biogaz issu de la décomposition de matières organiques.

Plus particulièrement, la présente invention concerne un dispositif pour détecter un risque de fragilisation par l'hydrogène d'un métal. En outre, la présente invention concerne un système comprenant au moins un tel dispositif et un équipement industriel à surveiller dont au moins une partie est formée dans ce métal, ainsi qu'un procédé pour surveiller un tel équipement industriel soumis à un environnement hydrogénant au moyen d'un tel dispositif.

La fragilisation par l'hydrogène est un phénomène relativement fréquent dans les avaries d'équipements industriels en matériaux métalliques, avec des conséquences parfois désastreuses. L'origine physique de ce phénomène vient de la facilité de diffusion de l'hydrogène dans la plupart des métaux, du fait de sa très petite taille (c'est le plus petit des atomes). Lorsque les environnements agressifs auxquels sont soumis les métaux contiennent de l'hydrogène, soit sous forme de molécule gazeuse soit comme constituant de molécules susceptibles de réagir à la surface du métal, celui-ci peut alors éventuellement pénétrer dans le métal, et notamment dans l'acier.

Une fois dans l'acier, l'hydrogène peut donc diffuser assez facilement, et éventuellement s'accumuler dans des zones métallurgiques favorables, comme des défauts cristallins (dislocations, lacunes, précipités), des joints de grains, des inclusions.

Cette accumulation d'hydrogène conduit à un affaiblissement des propriétés mécaniques du métal.

Si le métal est soumis à des contraintes (externes ou résiduelles), et que la résistance mécanique associée à l'hydrogène diminue en-dessous des contraintes appliquées, une fissuration locale peut se produire. Les contraintes en question peuvent avoir différentes sources : contraintes résiduelles locales associées aux défauts métallographiques, contraintes issues des étapes de mise en forme, contraintes de service des équipements (poids, pression interne...). Ensuite, avec l'accumulation d'hydrogène gazeux sous haute pression dans les cavités formées, une propagation de la fissuration peut se produire.

Ce type de fissuration représente un enjeu industriel important, dans la mesure où il s'agit d'un phénomène généralement soudain, sans signes précurseurs évidents, et pouvant conduire à des ruptures complètes d'équipement. Il existe donc un réel intérêt à disposer d'un capteur permettant d'anticiper la survenue de ce risque de ruptures.

Une grande diversité d'environnement est concernée par la FPH, comme par exemple les milieux gazeux contenant de l'hydrogène, les milieux aqueux corrosifs dans lesquels une réaction de réduction mettant en oeuvre un composé hydrogéné (comme l'eau ou comme les ions H+ en milieu acide) se produit.

## Technique antérieure

Afin d'évaluer les risques de fragilisation par l'hydrogène sur des équipements industriels, deux grandes familles de méthodes sont majoritairement utilisées :

- l'inspection périodique par des outils de contrôle non destructif,
- l'utilisation de capteurs visant à évaluer des flux d'hydrogène traversant le métal.

L'inspection périodique a pour but principal de détecter la présence d'éventuelles fissures, avec un seuil de détection aussi fin que possible, et/ou de suivre l'évolution dans le temps de fissures déjà détectées lors d'une précédente inspection. Ce type de méthode présente toutefois un niveau de risque assez élevé, lié d'une part au caractère généralement rapide de la propagation des fissures après amorçage, et d'autre part au caractère localisé des fissures, avec comme conséquence une probabilité élevée de ne pas détecter lesdites fissures par une inspection qui couvre rarement l'intégralité des équipements. Par conséquent, l'inspection spécifique à la FPH est souvent restreinte aux équipements pour lesquels les conséquences de fissures ne sont pas trop graves, par exemple des équipements sous pression modérée avec des fluides peu dangereux.

L'utilisation de capteurs spécifiques permet un suivi plus régulier.

En matière de fragilisation par l'hydrogène, le paramètre le plus souvent utilisé est le flux d'hydrogène traversant une membrane métallique. En effet, comme indiqué ci-dessus, la fragilisation par l'hydrogène des métaux provient de la pénétration de l'hydrogène depuis le milieu agressif vers l'intérieur de l'acier. Ce flux d'entrée s'avère être relativement aisé à mesurer avec des dispositifs de perméation à travers une membrane, en application directe des lois de diffusion de Fick. Les capteurs utilisés consistent en général en une membrane en acier, dont l'une des faces est exposée au milieu hydrogénant, alors que l'autre face est maintenue dans des conditions permettant à l'hydrogène de ressortir avec un dispositif de mesure de ce flux sortant. Dans le cas d'école d'une diffusion d'hydrogène sans interaction avec le métal (diffusion purement interstitielle), la mesure du flux stationnaire permet d'estimer la concentration en hydrogène dans le métal au niveau de la face d'entrée du capteur. Plusieurs types de dispositifs de mesure du flux d'hydrogène sortant de la membrane sont utilisés. Les plus fréquemment recensés dans la littérature scientifique sont des dispositifs électrochimiques, pour lesquels la face métallique de sortie de l'hydrogène est mise en contact avec une solution électrolytique et maintenue à un potentiel auquel l'oxydation des atomes d'hydrogène se produit spontanément et génère un courant électrique qui peut être mesuré par un dispositif de type ampèremètre. Ce type de dispositif est peu adapté à des applications de suivi d'équipements en service, en raison de la complexité de mise en œuvre, qui nécessite l'emploi d'une chambre de mesure remplie d'une solution électrolytique et équipée d'un système de mesures électrochimiques.

On connait également des dispositifs mettant en oeuvre une mesure de volume de l'hydrogène dans une cavité fermée et partiellement remplie d'un liquide (brevet US4416996A). L'évolution du volume donne ainsi une mesure directe du flux d'hydrogène sortant de la membrane, et ce flux peut alors être utilisé afin d'estimer les risques de fragilisation par l'hydrogène.

L'évaluation de la vitesse de corrosion de la paroi interne de métal est une autre application fréquemment citée pour les dispositifs précédemment évoqués qui mesurent un flux d'hydrogène à travers une paroi métallique. Le principe de ces mesures repose sur le lien entre la quantité d'hydrogène qui entre dans l'acier et la vitesse de corrosion. Ce lien est relativement direct, par exemple dans le cas de la corrosion en milieu aqueux acide, où la réaction cathodique est la réduction du proton donnant un atome d'hydrogène qui peut alors entrer dans le métal et diffuser. De telles méthodes pour le suivi de corrosion sont ainsi mentionnées dans les brevets US6058765A et US2013236975A.

Certaines limites peuvent être identifiées pour les dispositifs de l'art antérieur précédemment cités. En premier lieu, la grandeur mesurée est toujours un flux d'hydrogène à travers une paroi métallique. Une corrélation est ensuite proposée entre la valeur de ce flux et le risque de fragilisation par l'hydrogène ou la vitesse de corrosion de la paroi interne. Or, ce lien est loin d'être direct. Il est en effet connu de l'homme de l'art que la fragilisation par l'hydrogène conduisant à la fissuration interne (phénomène de « blistering », ou « hydrogen induced cracking », noté HIC dans la terminologie anglo saxonne) est grandement liée à la quantité d'hydrogène absorbée dans le métal, et à son activité chimique dans le métal. L'amorçage de la fissuration nécessite d'atteindre une concentration suffisante en hydrogène absorbé. Si la valeur du flux d'hydrogène est un des paramètres les plus facilement mesurables, il n'en est pas pour autant le plus pertinent : en effet, celui-ci indique la vitesse à laquelle l'hydrogène entre dans le métal, mais n'indique en rien la valeur limite (concentration ou activité en hydrogène absorbé) qui sera atteinte à l'état stationnaire. Cette valeur d'activité ou concentration d'hydrogène à l'état stationnaire est désignée Ce. Elle correspond à une pression interne d'hydrogène (par application de la loi de Sieverts), qui est désignée dans la suite du texte comme pression à l'équilibre, ou Pe. Or c'est bien le dépassement d'une concentration interne en hydrogène supérieure à un seuil donné (désigné comme concentration seuil Cs ou pression seuil Ps, selon qu'on utilise les grandeurs de concentration ou d'activité, ou les grandeurs de pression, qui sont liées entre-elles par la loi de Sieverts) qui conditionne la fissuration ou l'absence de fissuration. Cette valeur de concentration d'équilibre (Ce) peut être estimée à l'aide des mesures de flux, mais de façon assez approximative, et en faisant de nombreuses hypothèses simplificatrices sur le mode de diffusion, le coefficient de diffusion, et l'épaisseur de paroi, en considérant que la concentration d'équilibre (Ce) est égale à la concentration en hydrogène absorbé dans le métal au niveau de la face d'entrée (C0) calculée à partir des mesures de flux.

On connait également des dispositifs mettant en œuvre une mesure de pression, mais en vue d'estimer le flux d'hydrogène. Dans ce cas, la face de sortie de l'hydrogène débouche dans une enceinte étanche dans laquelle la pression est mesurée, et le flux d'hydrogène peut alors être déduit de la vitesse de montée en pression. Ce type de capteur est généralement équipé d'un système de purge afin d'évacuer régulièrement l'hydrogène accumulé dans le capteur, et de maintenir un gradient maximum d'hydrogène au sein de la membrane. Ce principe est décrit dans le brevet US6537824B. Comme souligné dans ce document, ce type de capteur peut avoir des temps de réponse très longs, de l'ordre d'un mois, ce qui ne permet pas une surveillance en temps réel d'un équipement industriel.

On connait également la demande de brevet WO 2017/080780 qui décrit un capteur et un procédé pour la mesure du risque de fragilisation par l'hydrogène d'un métal reposant sur la mesure de la pression dans une cavité formée dans ce métal et l'interprétation directe de cette mesure de pression pour estimer un risque de fragilisation, en comparant une pression mesurée avec une pression seuil prédéfinie au-delà de laquelle une fissuration par fragilisation à l'hydrogène peut survenir. Afin d'atteindre des temps de réponse raisonnable en service, ce document enseigne d'utiliser des épaisseurs de parois faibles. En effet, le flux de diffusion de l'hydrogène dans l'acier étant inversement proportionnel à l'épaisseur de métal à traverser, une réduction d'épaisseur permet d'accroitre le flux, et donc d'obtenir une montée en pression plus rapide dans la cavité.

Cependant, cette conception présente une contrepartie majeure, qui est d'abaisser la résistance mécanique du corps métallique creux. Il y a en effet un risque d'atteindre une pression d'éclatement du corps métallique. Il est important de noter que la pression d'éclatement ne doit pas être confondue avec la pression seuil au-delà de laquelle une fissuration par fragilisation à l'hydrogène peut survenir dans un métal. La pression d'éclatement définit en effet la pression nécessaire à faire éclater un équipement sous pression. Elle dépend donc des propriétés mécaniques et des caractéristiques géométriques du système, et se calcule par la mécanique de la rupture. La pression seuil en hydrogène traduit une concentration seuil en hydrogène dissous dans un métal, suffisante pour entrainer des décohésions internes à l'échelle cristallographique. Elle dépend des propriétés métallographiques, qui entrent dans le champ de la physique du solide.

La présente invention vise à pallier ces inconvénients. Plus précisément, la présente invention concerne un dispositif pour détecter un risque de fragilisation par l'hydrogène d'un métal, présentant à la fois un temps de réponse et une résistance mécanique acceptables en service.

**Résumé de l'invention**

La présente invention concerne un dispositif pour détecter un risque de fragilisation par l'hydrogène d'un métal, ledit dispositif étant destiné à être disposé dans un environnement hydrogénant, ledit dispositif comprenant au moins :

- un moyen de mesure de la pression,

- une chambre fermée, ladite chambre étant délimitée par des parois formées dans ledit métal, ladite chambre comprenant une ouverture pour communiquer avec ledit moyen de mesure de la pression

De plus, le dispositif selon l'invention comprend au moins un corps formé dans un matériau non poreux et inerte à l'hydrogène est disposé à l'intérieur de ladite chambre, le volume dudit au moins un corps représentant au moins 50% du volume intérieur de ladite chambre.

Selon une mise en œuvre de l'invention, ledit volume dudit au moins un corps peut représenter au moins 75% du volume intérieur de ladite chambre.

Selon une mise en œuvre de l'invention, ledit matériau dudit corps peut être en céramique non poreuse ou en verre non poreux.

Selon une mise en œuvre de l'invention, ledit dispositif peut comprendre en outre des moyens pour la transmission des mesures réalisées au moyen dudit moyen de mesure de la pression et/ou des moyens pour le traitement des mesures réalisées au moyen dudit moyen de mesure de la pression.

Selon une mise en œuvre de l'invention, ledit dispositif peut comprendre en outre un moyen pour donner une alerte lorsqu'une pression supérieure à une pression maximale acceptable en service est mesurée au moyen dudit moyen de mesure de la pression.

Selon une mise en œuvre de l'invention, lesdites parois peuvent être réalisées en acier.

L'invention concerne en outre un système comprenant au moins un équipement et au moins dispositif tel que décrit ci-dessus, ledit équipement comprenant au moins une paroi formée dans ledit métal, ladite chambre dudit dispositif étant formée dans au moins une partie de ladite paroi dans dudit équipement.

Selon une mise en œuvre de l'invention, ledit système peut comprendre au moins un équipement et au moins dispositif tel que décrit ci-dessus, ledit équipement comprenant au moins un élément formé dans ledit métal, ledit dispositif étant dissocié dudit équipement.

Selon une mise en œuvre de l'invention, ledit équipement peut être une canalisation.

Selon une mise en œuvre de l'invention, ledit équipement peut être un réacteur chimique.

L'invention concerne en outre un procédé pour surveiller dans le temps l'intégrité du métal d'un équipement placé dans un environnement hydrogénant, à partir d'une pression seuil Ps en hydrogène prédéfinie au-delà de laquelle un risque de fragilisation dudit métal par l'hydrogène existe, au moyen du dispositif tel que décrit ci-dessus, dans lequel :

a) On dispose ledit dispositif dans ledit environnement hydrogénant ;
b) On mesure au moyen dudit dispositif l'évolution au cours du temps de la pression Pint à l'intérieur de ladite chambre dudit dispositif ;
c) On compare ladite pression Pint à une pression maximale acceptable en service Pser, ladite pression maximale acceptable en service Pser étant fonction de ladite pression seuil Ps, et, si ladite pression Pint est supérieure à ladite pression maximale en service Pser, on met en œuvre un plan de sauvegarde dudit équipement.

Selon une mise en œuvre du procédé selon l'invention, ladite pression maximale acceptable en service Pser peut s'exprimer selon une pondération de ladite pression seuil Ps par un coefficient de sécurité compris entre 0.6 et 0.9.

Selon une mise en œuvre du procédé selon l'invention, on peut déterminer en outre ladite pression seuil Ps au moyen au moins des étapes suivantes : on soumet un élément formé dans ledit métal à différentes concentrations en hydrogène et on détermine la valeur de pression au-delà de laquelle ledit élément se fissure.

Selon une mise en œuvre du procédé selon l'invention, ledit environnement hydrogénant peut comprendre de l'eau et de l'H2S dissous, et peut présenter un pH compris entre 3 à 8, et préférentiellement compris entre 4 à 7.

Selon une mise en œuvre du procédé selon l'invention, ledit environnement hydrogénant peut être un milieu gazeux contenant de l'hydrogène tel que rencontré dans les procédés de raffinage.

**Liste des figures**

**[Fig 1]**

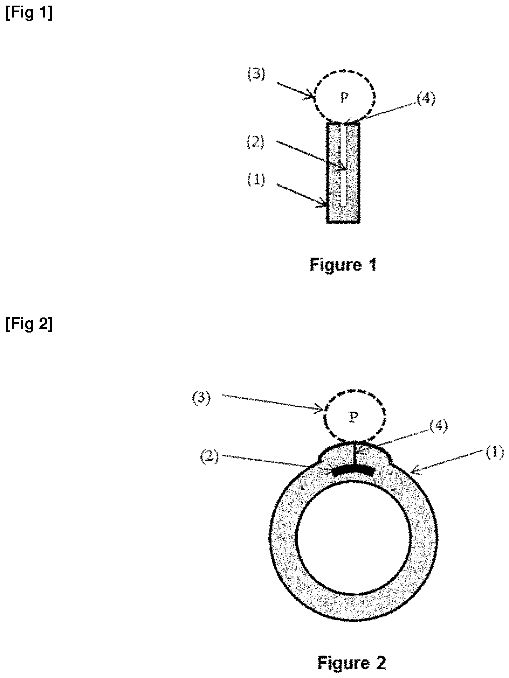

La figure 1 présente de manière illustrative une section longitudinale au travers d'un exemple de mise en œuvre d'une première variante du dispositif selon l'invention.

**[Fig 2]**
La figure 2 présente de manière illustrative une section transversale au travers d'un exemple de mise en œuvre d'une deuxième variante du dispositif selon l'invention, dans laquelle la chambre du dispositif selon l'invention est ménagée directement dans un élément en métal d'un équipement à surveiller.

**[Fig 3]**

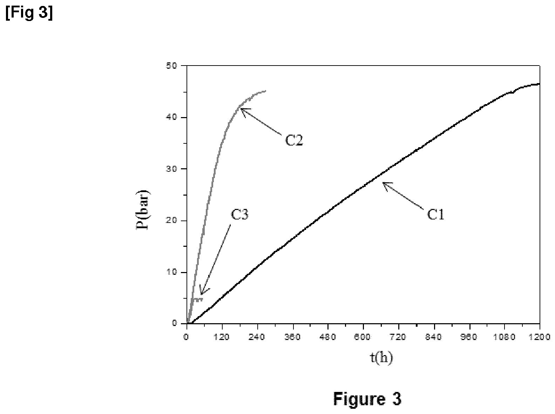

La figure 3 présente l'évolution de la pression au cours du temps mesurée au moyen d'un dispositif selon l'art antérieur (essai C1), d'un exemple de mise en œuvre du dispositif selon l'invention (essai C2) et d'un dispositif se distinguant du dispositif selon l'invention par un matériau impropre à la mise en œuvre de l'invention (essai C3).

**Description des modes de réalisation**

La présente invention concerne un dispositif pour détecter un risque de fragilisation par l'hydrogène d'un métal, le dispositif étant destiné à être disposé dans un environnement hydrogénant. Le dispositif peut notamment permettre de détecter le risque de fragilisation par l'hydrogène d'un équipement comprenant au moins un élément fabriqué dans ce métal.

De manière non limitative, l'environnement hydrogénant peut résulter de la présence d'hydrogène (H2) gazeux et/ou de sulfure d'hydrogène (H2S) dissous dans une phase aqueuse dans un milieu dont le pH est compris entre 3 à 8, ou encore entre 4 à 7. Un tel environnement hydrogénant peut être un milieu aqueux contenant de l'H2S dissous tel que rencontré en production pétrolière ou dans le traitement du biogaz issu de la décomposition de matières organiques. Un tel environnement hydrogénant peut également être un milieu gazeux contenant de l'hydrogène tel que rencontré dans les procédés de raffinage pétrolier. De manière non limitative, l'équipement dont le risque de fragilisation par l'hydrogène est à surveiller peut être une canalisation, par exemple une canalisation apte aux transports de produits pétroliers, bruts ou raffinés.

L'équipement dont le risque de fragilisation par l'hydrogène est à surveiller peut être également un réacteur chimique, tel qu'utilisé dans le raffinage pétrolier. En particulier, l'équipement à surveiller peut être un réacteur d'hydrotraitement.

Le dispositif selon l'invention repose sur la mesure de la pression à l'équilibre (aussi appelée pression stationnaire) dans une chambre métallique pour évaluer l'activité de l'hydrogène absorbé dans l'acier. En effet, en application de la loi de Sieverts, l'activité d'un élément gazeux dissous dans un métal est directement proportionnelle à la racine carrée de la pression de ce même gaz en équilibre avec le métal, correspondant donc à la pression à l'équilibre (Pe) engendrée par ce gaz dans la cavité de mesure. Par conséquent, la mesure de la pression à l'intérieur de la cavité du capteur peut être directement corrélée à l'activité ou concentration de l'hydrogène dans l'acier à l'équilibre (Ce). Or le risque de fissuration interne de type « blistering » ou « hydrogen induced cracking, noté en abrégé HIC » est directement relié à l'activité de l'hydrogène dans l'acier. La mesure de la pression permet donc une détection directe du risque de fragilisation par l'hydrogène d'un métal.

Par la suite, on appelle "pression seuil" que l'on note Ps, la pression en hydrogène au-delà de laquelle une fragilisation du métal d'intérêt survient. La pression seuil en hydrogène traduit une concentration seuil en hydrogène dissous dans un métal, suffisante pour entrainer des décohésions internes à l'échelle cristallographique. Elle dépend des propriétés métallographiques, et est donc fonction du métal lui-même.

Le dispositif selon l'invention comprend au moins :

- un moyen de mesure de la pression, comme par exemple un capteur de pression ;
- une chambre fermée, la chambre étant délimitée par des parois formées dans le métal dont on cherche à surveiller la fragilisation par l'hydrogène. Selon l'invention, la chambre comprend en outre une ouverture, pour communiquer avec le moyen de mesure de la pression. Selon une mise en œuvre de l'invention, l'ouverture de la chambre peut se présenter sous la forme d'un corps tubulaire creux, réalisé de préférence dans un matériau résistant à l'environnement hydrogénant et présentant une tenue mécanique suffisante, comme par exemple un acier inoxydable austénitique ou encore un alliage de nickel. De plus, cette ouverture permet le passage d'un système de connexion à un capteur de pression ;
- au moins un corps formé dans un matériau non poreux et inerte à l'hydrogène, disposé à l'intérieur de la chambre, le volume du ou de ces corps représentant au moins 50% du volume intérieur de la chambre. De préférence, la chambre comporte une pluralité de corps non poreux et inertes à l'hydrogène.

La présence d'au moins un corps formé dans un matériau non poreux (et inerte) dans la chambre, l'ensemble des corps occupant au moins 50% du volume intérieur de la chambre, permet de réduire le volume disponible pour l'hydrogène dans la chambre du dispositif. De cette manière, la pression seuil en hydrogène, telle que décrite ci-avant, peut être atteinte plus rapidement. En effet, à flux d'hydrogène donné, le temps de réponse du dispositif, défini comme le temps nécessaire pour atteindre la pression seuil d'hydrogène, est directement proportionnel au volume de la cavité dans laquelle l'hydrogène s'accumule. Ainsi, la présence de corps non poreux dans la chambre du dispositif selon l'invention permet d'améliorer le temps de réponse du dispositif selon l'invention. De plus, cette solution présente l'avantage de réduire le temps de réponse du dispositif, mais sans dégrader sa tenue mécanique propre, contrairement à une solution selon l'art antérieur dans laquelle l'épaisseur de la paroi de la chambre est réduite. Avantageusement, le volume du ou des corps disposés dans la chambre représente au moins 75% du volume intérieur de ladite chambre.

Le dispositif présente également un avantage notable par rapport à une solution technique selon laquelle la taille de la chambre serait réduite (par exemple diamètre extérieur dans le cas d'une chambre tubulaire ou dimensions extérieures de manière générale pour une géométrie non tubulaire de la chambre). En effet, on évite ainsi des techniques d'usinage de précision, potentiellement très onéreuses, en particulier pour former la cavité interne de dimension réduite.

Par ailleurs, le dispositif selon l'invention présente également un avantage notable dans le cas où le dispositif selon l'invention est utilisé en milieu corrosif hydrogénant, comme par exemple dans un milieu contenant de l'eau et de l'$H_2S$ dissous. En effet, dans ces milieux, la pénétration d'hydrogène dans le métal est indissociable de la réaction de corrosion du métal. Dans un tel environnement, la chambre en métal subit un amincissement de ses parois au fur et à mesure de son exposition. La présente invention, en ne nécessitant pas de réduire l'épaisseur des parois de la chambre, permet de maintenir une résistance mécanique suffisante en service, même dans des environnements fortement corrosifs.

Selon l'invention, le matériau des corps non poreux disposés dans la chambre est en outre inerte à l'hydrogène, c'est-à-dire que le matériau de corps ne peut entrer en interaction chimique et/ou physique avec l'hydrogène. Ceci a pour but d'éviter que tout ou partie de l'hydrogène gazeux présent dans la chambre ne soit consommé par des réactions avec le ou les corps, et ainsi d'éviter de fausser la mesure de la pression dans la chambre Selon une mise en œuvre de l'invention, on choisit des corps dans un matériau de type céramique ou verre, qui plus est non poreux pour satisfaire à la première condition énoncée ci-dessus. De manière générale, on évite les matériaux métalliques, de même que les matériaux en polymère : en effet, pour ce type de matériaux, une interaction est possible avec l'hydrogène (par exemple par formation d'hydrures ou par perméation dans la matière du corps de remplissage), pouvant fausser la mesure de pression dans la chambre. Ceci exclut par exemple d'utiliser comme matériau, pour le ou les corps disposés à l'intérieur de la chambre, des métaux comme le titane, susceptible de réagir avec l'hydrogène pour former des hydrures.

La géométrie du ou des corps non poreux et inertes à l'hydrogène peut être quelconque. Dans le cas d'une chambre tubulaire, les corps non poreux et inertes à l'hydrogène peuvent avoir la forme d'une ou de plusieurs tiges d'un diamètre inférieur à celui de la chambre du dispositif selon l'invention. Dans le cas d'une chambre de géométrie plus complexe, les corps non poreux et inertes à l'hydrogène peuvent être en forme de billes, de préférence ayant des granulométries différentes pour occuper le plus possible le volume intérieur de la chambre.

Selon une mise en œuvre de l'invention, l'épaisseur de la ou de chacune des parois en métal formant la chambre sont dimensionnées de manière à ce que la pression d'éclatement de la chambre soit strictement supérieure à la pression seuil en hydrogène. De préférence, l'épaisseur de la ou de chacune des parois en métal formant la chambre sont dimensionnées de manière à ce que la pression d'éclatement de la chambre soit au moins deux fois supérieure à la pression seuil en hydrogène du métal considéré. De cette manière, l'intégrité mécanique du dispositif selon l'invention est garantie en service. Le spécialiste a parfaite connaissance de techniques pour déterminer la pression d'éclatement d'une chambre en métal, en fonction de sa forme. On pourra se référer à la formule approchée de Barlow dans le cas d'une chambre en forme de tube, qui exprime la pression d'éclatement (Pmax) d'un tube métallique en fonction de la résistance à la rupture du métal (Rm), de l'épaisseur des parois (I) et du diamètre extérieur du tube (D) selon une formule du type :

**[Math 1]**

$$Pmax = \frac{2 \times Rm \times l}{D}.$$

Selon une mise en œuvre de l'invention, selon laquelle le dispositif selon l'invention vise à surveiller un équipement dont au moins un élément est formé dans un métal, l'épaisseur de la paroi la plus fine de la chambre est comprise entre 1/3 et 1/50 de la plus petite dimension de l'élément en métal à surveiller. De cette manière, en plus de la réduction du volume disponible à l'intérieur de la chambre, on réduit aussi l'épaisseur des parois de la chambre de manière à encore améliorer le temps de réponse du dispositif selon l'invention. Préférentiellement, l'épaisseur de la paroi la plus fine de la chambre est comprise entre 1/4 et 1/10 de la plus petite dimension de l'élément en métal.

Selon une mise en œuvre de l'invention, le dispositif comprend en outre des moyens pour la transmission (par exemple par voie filaire électrique ou par fibre optique) des mesures réalisées au moyen dudit moyen de mesure de la pression, et/ou des moyens pour le traitement (par exemple par voie informatique à l'aide d'un microprocesseur) des mesures réalisées au moyen du moyen de mesure de la pression.

Selon une mise en œuvre de l'invention, le dispositif comprend en outre un moyen d'alerte, pour alerter lorsqu'une pression supérieure à une pression maximale acceptable en service est détectée dans la chambre. Ce moyen d'alerte peut être par exemple une indication visuelle ou sonore, qui peut être positionnée à proximité immédiate du dispositif, ou bien reporté sur un système de mesure informatisé de type supervision. Selon l'invention, la pression maximale acceptable en service Pser est fonction de la pression seuil Ps d'hydrogène à partir de laquelle une fragilisation du métal considéré se produit. Selon une mise en œuvre de l'invention, la pression maximale acceptable en service Pser correspond à la pression seuil Ps pondérée par un coefficient de sécurité c compris entre 0 et 1, selon une formule du type Pser = Ps.c. Avantageusement, le coefficient de sécurité c est compris entre 0.6 et 0.9. Des moyens pour déterminer la pression seuil Ps sont décrits ci-après.

Selon une première variante de l'invention, le dispositif selon l'invention est distinct de l'équipement à surveiller, c'est-à-dire qu'ils n'ont pas d'élément structurel en commun. Dans ce cas, le métal dans lequel est formée la chambre du dispositif selon l'invention est avantageusement représentatif du métal d'un élément d'un équipement soumis à un environnement hydrogénant dont on veut surveiller le risque de fragilisation par l'hydrogène. En effet, les valeurs de pression seuil Ps qui définissent à partir de quelle quantité d'hydrogène absorbé le métal est susceptible de fissurer, sont propres à chaque métal ou chaque grade d'acier. Il est donc important que le métal utilisé pour la chambre du dispositif soit représentatif du métal de l'équipement à surveiller, et soit de manière préférée identique du métal de l'équipement à surveiller. Selon une mise en œuvre de l'invention selon laquelle le métal d'intérêt est l'acier, le grade de l'acier dans lequel est formée la chambre est le même que le grade de l'acier dans lequel est formé l'élément en métal de l'équipement à surveiller. Dans cette première variante de l'invention, le dispositif selon l'invention est avantageusement disposé à proximité de l'équipement à surveiller, de manière à être placé dans le même environnement hydrogénant. Dans cette première variante, la chambre métallique peut avoir une forme quelconque, puisque dissociée de l'équipement à réaliser. Avantageusement, la chambre peut avoir une forme tubulaire, mais la chambre peut avoir une forme quelconque, et par exemple être sphérique ou parallélépipédique. La Figure 1 présente un exemple de mise en œuvre de cette première variante de l'invention, dans lequel la chambre 2 est formée par des parois 1 constituées d'un tube fermé à une de ses extrémités, l'extrémité opposée du tube étant non fermée de manière à former une ouverture 4 pour communiquer avec un capteur de pression 3.

Selon une deuxième variante de l'invention, la chambre du dispositif selon l'invention est formée dans l'élément en métal de l'équipement dont on veut surveiller le risque de fragilisation par l'hydrogène. Plus précisément, l'équipement à surveiller comprend au moins un élément dont au moins une paroi est formée en métal, et la chambre du dispositif est formée dans au moins une portion de cette paroi de l'équipement. Selon une mise en œuvre de cette variante de l'invention, la chambre peut être usinée directement dans une paroi métallique de l'équipement à surveiller. La Figure 2 présente un exemple de mise en œuvre de cette deuxième variante, dans lequel l'équipement à surveiller est une canalisation par exemple en acier, la chambre 2 et donc ses parois 1 étant formées au sein même d'une portion de la canalisation à surveiller, la chambre 2 communiquant via une ouverture 4 avec un capteur de pression 3.

L'invention concerne en outre un procédé pour surveiller dans le temps l'intégrité du métal d'un équipement placé dans un environnement hydrogénant, à partir d'une pression seuil Ps en hydrogène prédéfinie au-delà de laquelle un risque de fragilisation du métal par l'hydrogène existe.

Le procédé selon l'invention est décrit ci-après comme mis en œuvre au moyen du dispositif tel que décrit ci-dessus, mais il peut également être mis en œuvre au moyen de tout dispositif pour mesurer la pression résultant de la perméation de l'hydrogène au sein du métal de l'équipement à surveiller.

Le procédé selon l'invention comprend au moins les étapes suivantes :

a) On dispose le dispositif selon l'invention dans l'environnement hydrogénant ;

b) On mesure au moyen du dispositif selon l'invention l'évolution au cours du temps de la pression Pint à l'intérieur de la chambre du dispositif ;

c) On compare la pression Pint à une pression maximale acceptable en service Pser, qui est fonction de la pression seuil, et on met en œuvre un plan de sauvegarde de l'équipement si la pression Pint est supérieure à la pression maximale acceptable en service Pser.

Selon une mise en œuvre de l'invention, on détermine la pression seuil Ps du métal d'intérêt au moyen de toute méthode d'essai de fragilisation par l'hydrogène bien connue de l'homme de l'art. De manière générale, pour cette méthode, on soumet un élément formé dans le métal d'intérêt à différentes concentrations en hydrogène et on détermine la valeur de pression au-delà de laquelle l'élément se fissure, au moyen d'un capteur de pression. Ces essais peuvent être réalisés au moyen du dispositif selon l'invention. Parmi ces méthodes d'essai de fragilisation par l'hydrogène, on peut citer par exemple l'essai décrit dans le document NACE TM0284 (NACE International) qui décrit la réalisation d'essais de tenue à la fissuration HIC d'aciers faiblement alliés en milieu aqueux contenant de l'H2S dissous.

Selon une mise en œuvre de l'invention, la pression maximale acceptable en service Pser correspond à la pression seuil Ps pondérée par un coefficient de sécurité c compris entre 0 et 1, selon une formule du type : Pser = Ps.c. Avantageusement, le coefficient de sécurité c est compris entre 0.6 et 0.9.

Selon une mise en œuvre de l'invention, le plan de sauvegarde de l'équipement à surveiller peut comprendre l'arrêt de l'exploitation de l'équipement à surveiller, par exemple en dépressurisant un équipement sous pression puis en le visant de ses produits, ou dans le cas d'une conduite de transport d'hydrocarbures, en stoppant la circulation de produits puis en procédant à une vidange.

Selon une autre variante, le plan de sauvegarde de l'équipement à surveiller peut comprendre la mise en place de mesures visant à diminuer le chargement en hydrogène, par exemple en injectant des inhibiteurs de corrosion. L'efficacité des mesures peut alors être évaluée à l'aide du dispositif selon l'invention, qui doit alors montrer une stabilisation ou une diminution de la pression d'hydrogène.

Le procédé selon l'invention peut être mis en œuvre au moyen d'un équipement (par exemple un poste de travail informatique) comprenant des moyens de traitement des données (un processeur), des moyens de stockage de données (une mémoire, en particulier un disque dur), une interface d'entrée et de sortie pour interagir avec un utilisateur, et des moyens de communication.

Les moyens de traitement de données peuvent être configurés pour notamment réaliser les étapes b) et c) du procédé selon l'invention, dans lesquelles on détermine si un pression interne Pint est atteinte de manière numérique et on compare cette pression d'équilibre à une pression maximale acceptable en service Pser.

Les moyens de communication peuvent être configurés pour envoyer une alerte à distance, lorsqu'il s'avère que la pression interne est supérieure à la pression maximale acceptable en service.

**Exemples**

Les avantages du dispositif et du procédé selon l'invention sont présentés ci-après dans un exemple d'application comparatif.

Pour cet exemple, on utilise un dispositif comprenant une chambre tubulaire formée en fer pur, de 80 mm de longueur, 3.2 mm de diamètre externe et 1.8 mm de diamètre interne. Le dispositif comprend en outre un support métallique en acier inoxydable austénitique de type AISI 316L reliant la chambre au capteur de pression. Ce dispositif est exposé à un milieu corrosif hydrogénant constitué d'eau salée (50 g/L NaCl) saturée en $H_2S$ dissous à une pression de 1 bar.

A des fins de comparaison, trois essais ont été réalisés :

1- Essai 1 : aucun corps n'est introduit dans la chambre du dispositif. Il s'agit donc d'un dispositif similaire à l'art antérieur. Le volume libre dans la chambre est de 3.7 mL.

2- Essai 2 : des corps en céramique, plus précisément de type alumine, ont été introduits dans la chambre. Cet essai correspond donc à un exemple de mise en œuvre du dispositif selon l'invention. Les géométries de ces corps correspondent à des portions de tige de diamètre légèrement inférieur (inférieur de - 0.1 à - 0.2 mm) au diamètre de la chambre. Le volume libre dans la chambre, en tenant compte de ces corps additionnels, est de 0.56 mL, soit plus de 6 fois plus faible que dans l'essai 1.

3- Essai 3 : des corps en matériau polymère, plus précisément en polyéthylène, ont été introduits dans la chambre, et ce de manière à ce que le volume libre dans la chambre soit le même que le volume libre dans le cas de l'essai 2, soit environ 0.56 mL. Cet essai vise à évaluer la pertinence du matériau des corps placés dans la chambre selon l'invention.

La figure 3 présente l'évolution de la pression P mesurée dans la chambre en fonction du temps t, dans le cas des trois essais décrits ci-dessus. Ainsi, la courbe C1 montre que, dans le cas de l'essai 1, la pression d'hydrogène stationnaire est comprise entre 45 et 50 bar, et est atteinte après environ 1200 heures de test. La courbe C2 montre que, dans le cas de l'essai 2, une pression d'hydrogène stationnaire de 45 bar est mesurée (donc à un niveau équivalent à celui du premier essai), mais après une durée de seulement 200 heures.

Et enfin, la courbe C3 montre que, dans le cas de l'essai 3, la courbe de montée en pression a un comportement plus éloigné de la linéarité que pour les deux autres essais, avec une évolution par paliers. De plus, après une pression de 5 bar, il n'a plus été observé de variation sensible de pression. Après arrêt de cet essai, il a été constaté que le capteur de pression était endommagé, suite à l'application d'une pression de contact avec un corps en polymère qui avait été disposé juste sous la membrane du capteur. Ces résultats indiquent qu'une réaction de gonflement s'est produite entre le polymère et l'hydrogène gazeux, et que ce gonflement a conduit à une détérioration du dispositif de mesure. Ceci démontre qu'un matériau en polymère, et notamment en polyéthylène, qui n'est pas un matériau à la fois non poreux et inerte à l'hydrogène, n'est pas adapté pour les corps selon l'invention à disposer à l'intérieur de la chambre du dispositif selon l'invention.

Ainsi, la présente invention présente un avantage important par rapport à l'art antérieur, puisqu'elle permet d'atteindre une pression stationnaire dans la chambre du dispositif en un temps beaucoup plus court, ce qui permet de détecter plus rapidement un risque de fragilisation de l'équipement à surveiller. De plus, le choix du matériau relatif aux corps disposés à l'intérieur de la chambre du dispositif selon l'invention permet une mesure fiable de la pression et d'éviter la détérioration précoce du dispositif selon l'invention.

**Revendications**

**1.** Dispositif pour détecter un risque de fragilisation par l'hydrogène d'un métal, ledit dispositif étant destiné à être disposé dans un environnement hydrogénant, ledit dispositif comprenant au moins :

- un moyen de mesure de la pression (3),
- une chambre fermée (2), ladite chambre (2) étant délimitée par des parois (1) formées dans ledit métal, ladite chambre (2) comprenant une ouverture (4) pour communiquer avec ledit moyen de mesure de la pression (3) **caractérisé en ce qu'**au moins un corps formé dans un matériau non poreux et inerte à l'hydrogène est disposé à l'intérieur de ladite chambre (2), le volume dudit au moins un corps représentant au moins 50% du volume intérieur de ladite chambre (2).

2. Dispositif selon la revendication 1, dans lequel ledit volume dudit au moins un corps représente au moins 75% du volume intérieur de ladite chambre (2).

3. Dispositif selon l'une des revendications précédentes, dans lequel ledit matériau dudit corps est en céramique non poreuse ou en verre non poreux.

4. Dispositif selon l'une des revendications précédentes, dans lequel ledit dispositif comprend en outre des moyens pour la transmission des mesures réalisées au moyen dudit moyen de mesure de la pression et/ou des moyens pour le traitement des mesures réalisées au moyen dudit moyen de mesure de la pression.

5. Dispositif selon l'une des revendications précédentes, dans lequel ledit dispositif comprend en outre un moyen pour donner une alerte lorsqu'une pression supérieure à une pression maximale acceptable en service est mesurée au moyen dudit moyen de mesure de la pression.

6. Dispositif selon l'une des revendications précédentes, dans lequel lesdites parois (1) sont réalisées en acier.

7. Système comprenant au moins un équipement et au moins dispositif selon l'une des revendications 1 à 6, ledit équipement comprenant au moins une paroi formée dans ledit métal, ladite chambre (2) dudit dispositif étant formée dans au moins une partie de ladite paroi dans dudit équipement.

8. Système comprenant au moins un équipement et au moins dispositif selon l'une des revendications 1 à 6, ledit équipement comprenant au moins un élément formé dans ledit métal, ledit dispositif étant dissocié dudit équipement.

9. Système selon l'une des revendications 7 à 8, dans lequel ledit équipement est une canalisation.

10. Système selon l'une des revendication 7 à 8, dans lequel ledit équipement est un réacteur chimique.

11. Procédé pour surveiller dans le temps l'intégrité du métal d'un équipement placé dans un environnement hydrogénant, à partir d'une pression seuil Ps en hydrogène prédéfinie au-delà de laquelle un risque de fragilisation dudit métal par l'hydrogène existe, au moyen du dispositif selon l'une des revendications 1 à 6, dans lequel :

a) On dispose ledit dispositif dans ledit environnement hydrogénant ;
b) On mesure au moyen dudit dispositif l'évolution au cours du temps de la pression Pint à l'intérieur de ladite chambre dudit dispositif ;
c) On compare ladite pression Pint à une pression maximale acceptable en service Pser, ladite pression maximale acceptable en service Pser étant fonction de ladite pression seuil Ps, et, si ladite pression Pint est supérieure à ladite pression maximale en service Pser, on met en œuvre un plan de sauvegarde dudit équipement.

12. Procédé selon la revendication 11, dans lequel ladite pression maximale acceptable en service Pser s'exprime selon une pondération de ladite pression seuil Ps par un coefficient de sécurité compris entre 0.6 et 0.9.

13. Procédé selon l'une des revendications 11 à 12, dans lequel on détermine en outre ladite pression seuil Ps au moyen au moins des étapes suivantes : on soumet un élément formé dans ledit métal à différentes concentrations en hydrogène et on détermine la valeur de pression au-delà de laquelle ledit élément se fissure.

14. Procédé selon l'une des revendications 11 à 13, dans lequel ledit environnement hydrogénant comprend de l'eau et de l'H2S dissous, et présente un pH compris entre 3 à 8, et préférentiellement compris entre 4 à 7.

15. Procédé selon l'une des revendications 11 à 13, dans lequel ledit environnement hydrogénant est un milieu gazeux contenant de l'hydrogène tel que rencontré dans les procédés de raffinage.

[Fig 1]

Figure 1

[Fig 2]

Figure 2

[Fig 3]

**Figure 3**

Europäisches
Patentamt

European
Patent Office

Office européen
des brevets

# RAPPORT DE RECHERCHE EUROPEENNE

Numéro de la demande

EP 19 21 1980

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2018/144313 A2 (SAUDI ARABIAN OIL CO [SA]; ARAMCO SERVICES CO [US]) 9 août 2018 (2018-08-09) * alinéas [0003], [0022] - [0032], [0053] - [0056]; figures 1A,1B,2A,2B * ----- | 1-15 | INV. G01N17/00 G01N17/04 |
| X | US 4 056 968 A (WINSLOW JR JOSEPH D) 8 novembre 1977 (1977-11-08) * colonne 2, ligne 45 - colonne 3, ligne 58; figure 1 * ----- | 1-15 | |
| A,D | WO 2017/080780 A1 (IFP ENERGIES NOW [FR]) 18 mai 2017 (2017-05-18) * abrégé; figures 1,1 BIS * ----- | 1-15 | |

| DOMAINES TECHNIQUES RECHERCHES (IPC) |
|---|
| G01N |

Le présent rapport a été établi pour toutes les revendications

| Lieu de la recherche | Date d'achèvement de la recherche | Examinateur |
|---|---|---|
| La Haye | 13 janvier 2020 | Gilow, Christoph |

CATEGORIE DES DOCUMENTS CITES

X : particulièrement pertinent à lui seul
Y : particulièrement pertinent en combinaison avec un
 autre document de la même catégorie
A : arrière-plan technologique
O : divulgation non-écrite
P : document intercalaire

T : théorie ou principe à la base de l'invention
E : document de brevet antérieur, mais publié à la
 date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 21 1980

13-01-2020

| Document brevet cité au rapport de recherche | Date de publication | Membre(s) de la famille de brevet(s) | Date de publication |
|---|---|---|---|
| WO 2018144313 A2 | 09-08-2018 | CN 110199009 A<br>EP 3577200 A2<br>KR 20190126067 A<br>SG 11201906562R A<br>US 2018217049 A1<br>WO 2018144313 A2 | 03-09-2019<br>11-12-2019<br>08-11-2019<br>27-08-2019<br>02-08-2018<br>09-08-2018 |
| US 4056968 A | 08-11-1977 | AUCUN | |
| WO 2017080780 A1 | 18-05-2017 | BR 112018008070 A2<br>EP 3374754 A1<br>FR 3043465 A1<br>WO 2017080780 A1 | 23-10-2018<br>19-09-2018<br>12-05-2017<br>18-05-2017 |

EPO FORM P0460

**EP 3 667 292 A1**

## RÉFÉRENCES CITÉES DANS LA DESCRIPTION

### Documents brevets cités dans la description

- US 4416996 A
- US 6058765 A
- US 2013236975 A
- US 6537824 B
- WO 2017080780 A